# FASCICULE DE BREVET EUROPEEN

(11) **EP 0 629 306 B1**
(45) Date de publication et mention de la délivrance du brevet: **07.02.1996**
(21) Numéro de dépôt: 93905447.4
(22) Date de dépôt: 02.03.1993
(51) Int. Cl.: G09F 7/12, B42F 21/12

(54) **OUTIL D'ORGANISATION ET/OU DE PLANIFICATION A FICHES ECHANCREES**
ORGANISIERUNGS-UND/ODER PLANUNGSVORRICHTUNG MIT AUSGEZACKTEN KARTEIKARTEN
ORGANIZING AND/OR PLANNING AID HAVING INDENTED SLIPS

(30) Priorité: 03.03.1992 FR 9202490
(43) Date de publication de la demande: 21.12.1994
(73) Titulaire: Bretonvilloise d'Invention et d'Innovation, F-80380 Villers-Bretonneux (FR)
(72) Inventeur: MORTEMARD DE BOISSE, Jérôme, F-80380 Villers-Bretonneux (FR)
(74) Mandataire: Sauvage, Renée
(86) Numéro de dépôt international: FR9300211
(87) Numéro de publication internationale: WO9318498

(56) Documents cités:
- FR-A- 2 648 937
- US-A- 4 422 672

## Description

La présente invention concerne un outil d'organisation et/ou de planification, comprenant une série de fiches et au moins un support adapté à recevoir temporairement lesdites fiches dans un ordre de classement déterminé et modifiable.

Plus précisément, l'invention concerne un outil du type précité, dans lequel lesdites fiches sont constituées de papillons de papier, dits papillons "transférables", ayant une face inscriptible et une face partiellement enduite d'un adhésif sensible à la pression permettant des collages, décollages et re-collages répétés, la face inscriptible desdits papillons transférables offrant une zone d'identification/classement et une zone d'annotation et le support présentant des zones de réception des papillons, avec un chevauchement partiel entre eux laissant à découvert leur zone d'identification/classement.

Un outil de ce type est connu d'après WO 92/0̸0̸581.

Avec cet outil connu, les informations associées à chacun des papillons et directement lisibles sont portées dans la zone d'identification/classement. Or, il serait souhaitable de multiplier les informations en établissant une relation entre chaque papillon et des types divers de données complémentaires, telles que "professionnel", "privé" etc., ou "urgence", "routine", etc.

Ce but est atteint par l'invention qui propose un outil du type précité dans lequel chaque papillon présente une découpe ou échancrure, continue ou non, formant fenêtre(s), affectant au moins un bord de ses zones d'identification/classement et d'annotation tandis que le support présente au moins une colonne d'information visible au travers de la ou desdites fenêtres lorsque lesdits papillons y sont reçus.

Dans une forme d'exécution préférée, la découpe de chaque papillon détermine une fenêtre primaire, dans la zone d'identification/classement, et une fenêtre secondaire, dans la zone d'annotation, ladite fenêtre primaire étant adaptée à venir se trouver dans l'alignement de la fenêtre secondaire d'un ou plusieurs autres papillons, lorsque ceux-ci sont en place sur le support avec chevauchement partiel entre eux.

Pour que la vision "en enfilade" à travers les fenêtres primaire et secondaire(s) soit optimale, la profondeur de la fenêtre secondaire des papillons est au moins égale à celle de leur fenêtre primaire.

Le support peut présenter plusieurs colonnes d'information parallèles et juxtaposées, ce qui permet d'associer chaque papillon à la colonne appropriée en faisant correspondre sa fenêtre primaire à ladite colonne.

On comprend que, dans ce cas, les papillons qui se chevauchent partiellement peuvent être décalés latéralement les uns par rapport aux autres. Dans cette hypothèse, la fenêtre secondaire a une profondeur au moins égale à la largeur cumulée desdites colonnes pour que la vision en enfilade reste possible malgré le décalage.

L'information de la, ou d'une, colonne d'information du support peut être constituée par une couleur codée, par exemple verte pour les affaires courantes, rouges pour les affaires urgentes, etc ...

L'information peut être également constituée par une succession de signes, tels que chiffres ou lettres.

Différents types d'informations peuvent être utilisés dans des colonnes juxtaposées, ou même combinées (couleur et signes) dans une même colonne.

L'invention sera mieux comprise à la lecture de la description suivante faite en référence au dessin annexé dans lequel :
- la figure 1 montre une forme d'exécution d'un papillon selon l'invention,
- la figure 1a est une représentation partielle d'une variante d'exécution du papillon de la figure 1,
- la figure 2 montre une forme d'exécution d'un support selon l'invention,
- la figure 3 montre un exemple de relation entre papillons et support,
- la figure 3a est une représentation partielle semblable à la figure 3 mais utilisant des papillons selon la figure 1a au lieu des papillons selon la figure 1 et
- la figure 3b montre le risque d'acrochage entre papillons selon la forme d'exécution de la figure 3a.

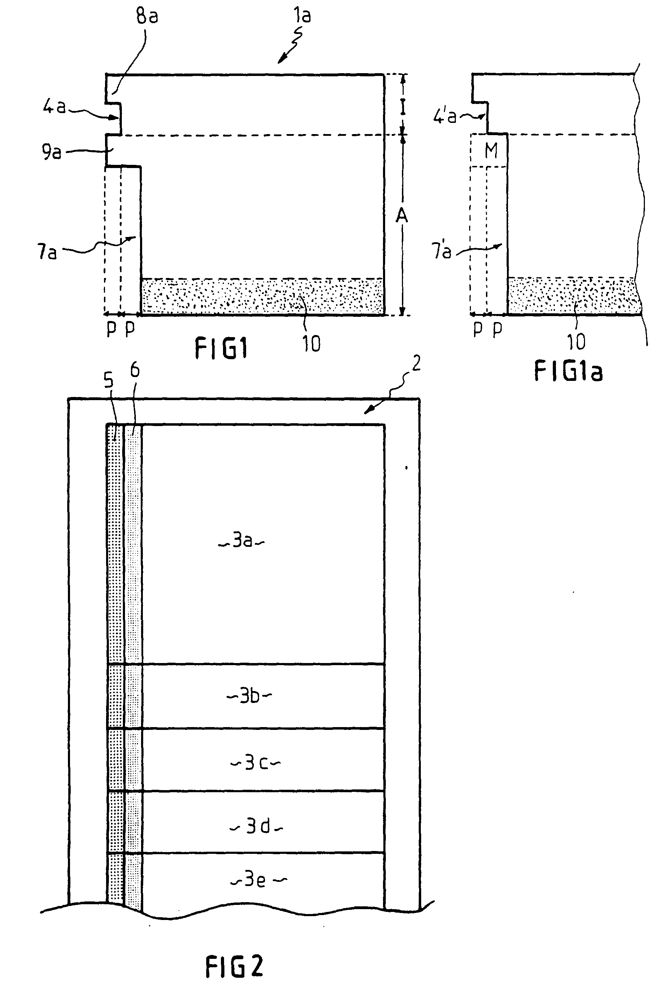

Si l'on se reporte aux figures 1 et 2, on voit un papillon transférable la qui comporte une zone d'identification/classement I et une zone d'annotation A. Le papillon 1a et des papillons identiques sont adaptés à être reçus sur un support 2 sur lequel sont matérialisées des zones de réception 3a, 3b, ... 3e des papillons avec chevauchement partiel entre eux. L'immobilisation temporaire des papillons sur le support est assurée par une couche d'adhésif de pression 10̸ prévue sur l'envers des papillons. Pour plus de détails quant au mode d'utilisation des papillons sur le support 2, on peut se reporter à WO 92/0̸0̸581.

L'outil selon l'invention se distingue de celui faisant l'objet de ce document antérieur par le fait que la zone I du papillon 1a comporte une découpe latérale 4a de profondeur p, formant fenêtre primaire, tandis que sa zone A comporte une découpe latérale 7a de profondeur 2p, formant fenêtre secondaire.

Au lieu d'avoir deux découpes 4a et 7a séparées, on pourrait n'en avoir qu'une, étagée, comme le montre la figure la en 4'a, 7'a, mais on préfère la forme d'exécution de la figure 1, la présence de la petite portion de matière en pointillés, référencée M à la figure 1a, offrant des avantages.

Le support 2 selon l'invention présente, de son côté, deux colonnes d'information 5 et 6, de couleurs différentes, par exemple verte pour la colonne 5 et rouge pour la colonne 6, ces couleurs ayant un sens codé.

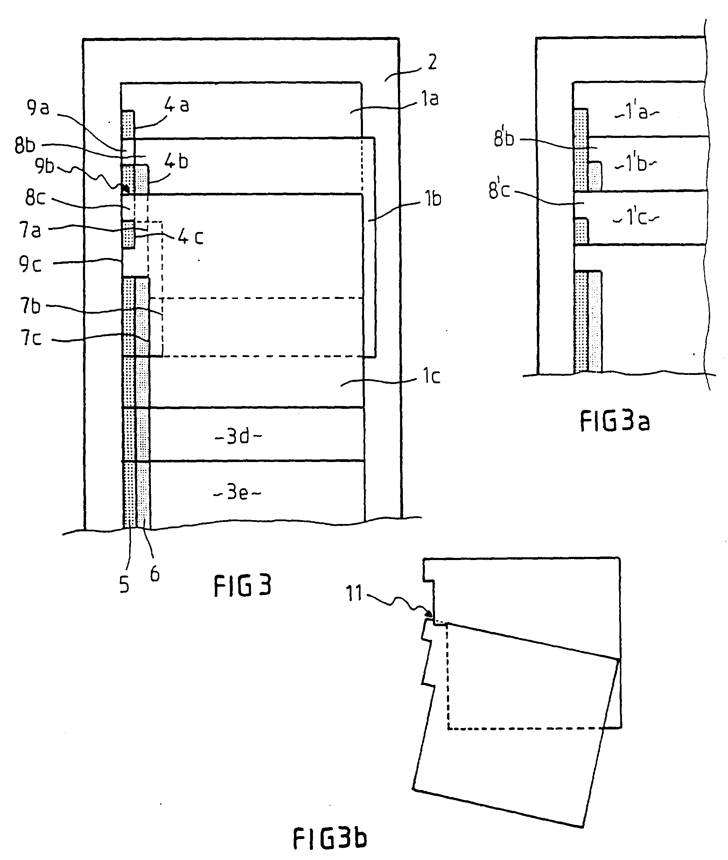

L'utilité de ces dispositions ressort de la figure 3 : comme on le voit, trois papillons 1a, 1b, 1c ont été collés sur le support 2 en respectant, sur le plan vertical, les zones de réception 3a, 3b, 3c prévues sur ce dernier et en sélectionnant, sur le plan horizontal, le décalage qui fera apparaître dans la fenêtre primaire 4a, 4b et 4c desdits papillons celle des colonnes 5 et 6 choisie. Ainsi, par exemple, si la couleur verte de la colonne 5 signifie "affaire courante" et que la couleur rouge de la colonne 6 signifie "affaire urgente", la position des papillons 1a, 1b et 1c indiquera que les travaux indiqués sur le premier et le troisième papillons sont à traiter sous un délai normal, mais que le travail indiqué sur le papillon 1b est à effectuer en urgence, un papillon donné pouvant bien entendu être décalé latéralement dans un sens ou dans l'autre selon les circonstances.

On comprend que l'utilité de la fenêtre secondaire 7a, 7b et 7c est de permettre la vision des colonnes 5 et 6 du support malgré le chevauchement des papillons, chaque fenêtre primaire venant se placer dans l'alignement d'au moins une fenêtre secondaire. On comprend également que la largeur des fenêtres secondaires est fonction du nombre de colonnes du support, pour que cette vision "en enfilade" demeure possible même lorsque les papillons sont décalés. Ainsi, dans la forme d'exécution représentée où il est prévu deux colonnes 5, 6, chacune d'une largeur correspondant à la profondeur p de la fenêtre primaire 4a, 4b, 4c, la profondeur de la fenêtre secondaire des papillons doit être au moins égale à 2p.

La présence de la zone de matière M fait qu'à chaque papillon est toujours associé un espace de colonne 5 ou 6 fermé sur trois côtés et de forme constante, correspondant à la forme de la fenêtre 4a, 4b, 4c ... alors qu'en l'absence de cette zone, cet espace de colonne pourrait avoir une forme très variable en fonction des successions de décalages entre papillons (voir figure 3a), ce qui nuirait quelque peu à la lisibilité de l'ensemble.

L'absence de cette zone de matière M aurait également pour inconvénient, en cas de mauvais alignement des papillons, de faire que les papillons "s'accrochent" entre eux comme on le voit à la figure 3b, en 11.

On préfère donc la forme d'exécution du papillon selon la figure 1 qui détermine une languette supérieure 8a et une languette inférieure 9a de part et d'autre de la découpe 4a. Comme on le voit à la figure 3, les languettes supérieures 8b, 8c des papillons 4b, 4c viennent se placer dans l'alignement des languettes inférieures 9a, 9b des papillons 1a, 1b, soit avec un décalage horizontal, soit avec une coincidence, ce qui contribue à positionner les papillons sur le support 2 et évite les risques d'accrochage entre papillons.

## Revendications

1. Outil d'organisation et/ou de planification, comprenant une série de fiches et au moins un support (2) adapté à recevoir temporairement lesdites fiches dans un ordre de classement déterminé et modifiable, lesdites fiches étant constituées de papillons de papier, dits papillons "transférables" (1a, 1b, 1c), ayant une face inscriptible et une face partiellement enduite d'un adhésif sensible à la pression permettant des collages, décollages et re-collages répétés, la face inscriptible desdits papillons transférables offrant une zone d'identification/classement (I) et une zone d'annotation (A) et le support présentant des zones de réception (3a, 3b, 3c) des papillons, avec un chevauchement partiel entre eux laissant à découvert leur zone d'identification/classement (I), caractérisé en ce que chaque papillon (1a, 1b, 1c) présente une découpe ou échancrure (4a,7a;4b,7b;4c,7c), continue ou non, formant fenêtre(s), affectant au moins un bord de ses zones d'identification/classement (I) et d'annotation (A) et en ce que le support (2) présente au moins une colonne d'information (5, 6) visible au travers de la ou desdites fenêtres lorsque lesdits papillons sont reçus sur ledit support.

2. Outil selon la revendication 1, caractérisé en ce que la découpe de chaque papillon détermine une fenêtre primaire (4a, 4b, 4c), dans la zone d'identification/ classement (I), et une fenêtre secondaire (7a, 7b, 7c), dans la zone d'annotation (A), ladite fenêtre primaire étant adaptée à venir se trouver dans l'alignement de la fenêtre secondaire d'un ou plusieurs autres papillons,- lorsque ceux-ci sont en place sur le support (2) avec chevauchement partiel entre eux.

3. Outil selon la revendication 2, caractérisé en ce que la profondeur de la fenêtre secondaire (7a, 7b, 7c) est au moins égale à celle de la fenêtre primaire (4a, 4b, 4c).

4. Outil selon l'une quelconque des revendications 1 à 3, caractérisé en ce que le support (2) présente plusieurs colonnes d'information (5, 6) parallèles et juxtaposées.

5. Outil selon l'une quelconque des revendications 1 à 4, caractérisé que l'information de la, ou d'une, colonne d'information (5, 6) est constituée par une couleur codée.

6. Outil selon l'une quelconque des revendications 1 à 5, caractérisé en ce que l'information de la, ou d'une, colonne d'information (5, 6) est constituée par une succession de signes, tels que chiffres, lettres, et cetera.

7. Outil selon l'une quelconque des revendication 4 à 6, caractérisé en ce que la fenêtre secondaire (7a, 7b, 7c) a une profondeur (2p) au moins égale à la largeur cumulée desdites colonnes (5, 6).

## Claims

1. An organization and/or planning tool, comprising a series of cards and at least one support (2) adapted to temporarily receive said cards in a specific and modifiable classification order, said cards consisting of paper stickers, called "transferable" stickers (1a, 1b, 1c), having an inscribable face and a face which is partially coated with a pressure-sensitive adhesive permitting repeated sticking, unsticking and resticking operations, the inscribable face of said transferable stickers offering an identification/classification zone (I) and an annotation zone (A) and the support having zones for receiving (3a, 3b, 3c) the stickers, with a partial overlap between them leaving their identification/classification zone (I) uncovered, wherein each sticker (1a, 1b, 1c) has a continuous or discontinuous cut-out or indentation (4a, 7a ; 4b, 7b ; 4c, 7c) forming a window(s), affecting at least one edge of its identification/classification (I) and annotation (A) zones, and wherein the support (2) has at least one column of information (5, 6) which can be seen through said window or windows when said stickers are received on said support.

2. The tool as claimed in claim 1, wherein the cut-out of each sticker determines a primary window (4a, 4b, 4c) in the identification/classification zone (I) and a secondary window (7a, 7b, 7c) in the annotation zone (A), said primary window being adapted to align with the secondary window of one or more other stickers when the latter are in place on the support (2) with partial overlap between them.

3. The tool as claimed in claim 2, wherein the depth of the secondary window (7a, 7b, 7c) is at least equal to that of the primary window (4a, 4b, 4c).

4. The tool as claimed in any one of claims 1 to 3, wherein the support (2) has several parallel and juxtaposed columns of information (5, 6).

5. The tool as claimed in any one of claims 1 to 4, wherein the information of the or of one column of information (5, 6) consists of a coded colour.

6. The tool as claimed in any one of claims 1 to 5, wherein the information of the or of one column of information (5, 6) consists of a succession of signs, such as figures, letters, etc.

7. The tool as claimed in any one of claims 4 to 6, wherein the secondary window (7a, 7b, 7c) has a depth (2p) which is at least equal to the cumulative width of said columns (5, 6).

## Patentansprüche

1. Organisations- und/oder Planungswerkzeug, umfassend eine Reihe von Zetteln und mindestens einen Träger (2), der zur zeitweisen Aufnahme dieser Zettel in einer bestimmten und veränderbaren Ordnung ausgebildet ist, wobei diese Zettel aus Klebezetteln aus Papier, "übertragbare" Klebezettel (1a, 1b, 1c) genannt, bestehen, die eine beschreibbare Seite und eine teilweise mit einem für Druck empfindlichen Klebstoff beschichtet ist, der wiederholte Verklebungen, Ablösungen und Wiederverklebungen gestattet, wobei die beschreibbare Seite dieser übertragbaren Klebezettel eine Kennzeichnungs/Ordnungszone (I) und eine Notizzone (A) besitzt und der Träger Zonen (3a, 3b, 3c) zur Aufnahme der Klebezettel mit einer partiellen gegenseitigen Überlappung aufweist, die ihre Kennzeichnungs/Ordnungszone (I) freigelegt läßt, dadurch gekennzeichnet, daß jeder Klebezettel (1a, 1b, 1c) einen Ausschnitt oder eine Aussparung (4a, 7a; 4b, 7b; 4c, 7c), die durchgehend ist oder nicht und ein oder mehrere Fenster bildet, die sich mindestens an einem Rand seiner Kennzeichnungs/Ordnungs- (I) und Notizzonen (A) erstrecken, und daß der Träger (2) mindestens eine Informationsspalte (5, 6) aufweist, die durch das oder die Fenster sichtbar ist, wenn diese Klebezettel auf dem Träger aufgenommen sind.

2. Werkzeug nach Anspruch 1, dadurch gekennzeichnet, daß der Ausschnitt jedes Klebezettels ein primäres Fenster (4a, 4b, 4c) in der Kennzeichnungs/Ordnungszone (I) und ein sekundäres Fenster (7a, 7b, 7c) in der Notizzone (A) abgrenzt, wobei dieses primäre Fenster so ausgebildet ist, daß es mit dem sekundären Fenster eines oder mehrerer anderer Klebezettel in eine Linie gelangen kann, wenn diese mit partieller gegenseitiger Überlappung auf dem Träger (2) am Platz sind.

3. Werkzeug nach Anspruch 2, dadurch gekennzeichnet, daß die Tiefe des sekundären Fensters (7a, 7b, 7c) mindestens gleich der des primären Fensters (4a, 4b, 4c) ist.

4. Werkzeug nach einem der Ansprüche 1 bis 3, dadurch gekennzeichnet, daß der Träger (2) mehrere parallele und nebeneinander angeordnete Informationsspalten (5, 6) aufweist.

5. Werkzeug nach einem der Ansprüche 1 bis 4, dadurch gekennzeichnet, daß die Information der oder einer Informationsspalte (5, 6) von einer kodierten Farbe gebildet ist.

6. Werkzeug nach einem der Ansprüche 1 bis 5, dadurch gekennzeichnet, daß die Information der oder einer Informationsspalte (5, 6) von einer Folge von Zeichen, wie Zahlen, Buchstaben usw. gebildet ist.

7. Werkzeug nach einem der Ansprüche 4 bis 6, dadurch gekennzeichnet, daß das sekundäre Fenster (7a, 7b, 7c) eine Tiefe (2p) mindestens gleich der kumulierten Breite dieser Spalten (5, 6) hat.
